# FASCICULE DE BREVET EUROPEEN

(11) **EP 0 934 485 B1**
(45) Date de publication et mention de la délivrance du brevet: **23.07.2003**
(21) Numéro de dépôt: 97912293.4
(22) Date de dépôt: 31.10.1997
(51) Int. Cl.: F16L 31/02, F16L 33/00, F16L 47/02, F16L 47/00

(54) **PROCEDE DE VERROUILLAGE DE L'EMMANCHEMENT D'UN TUBE EN MATIERE PLASTIQUE SUR UN EMBOUT**
VERRIEGELUNGSVERFAHREN ZUM EINDRUCKEN EINES ROHRES AUS KUNSTSTOFF IN EIN ANSCHLUSSSTÜCK
METHOD FOR LOCKING THE JOINTING OF A PLASTIC TUBE ON A CONNECTING PIECE

(30) Priorité: 04.11.1996 FR 9613398
(43) Date de publication de la demande: 11.08.1999
(73) Titulaire: NOBEL PLASTIQUES, F-92000 Nanterre (FR)
(72) Inventeur: MOULET, Michel, F-51300 Loisy sur Marne (FR)
(74) Mandataire: Robert, Jean-Pierre
(86) Numéro de dépôt international: FR9701955
(87) Numéro de publication internationale: WO98020272

(56) Documents cités:
- EP-A- 0 305 786
- EP-A- 0 577 492
- EP-A- 0 710 794

## Description

La présente invention concerne l'amélioration de l'assemblage d'une canalisation à un accessoire tel qu'un embout.

Il est banal et connu aujourd'hui d'assembler l'extrémité d'une canalisation tubulaire par exemple en matière plastique à un embout ou à un accessoire en provoquant l'emmanchement forcé d'une extrémité tubulaire de cet accessoire à l'intérieur de l'extrémité du tube. A cet effet, la partie tubulaire de l'accessoire est souvent conformée avec des reliefs par exemple en profil dit "en dents de sapin" ces reliefs améliorant le pouvoir d'accrochage du tube à l'embout.

Les exigences quant à l'étanchéité de la liaison deviennent de plus en plus importantes et ceci est notamment vrai dans le domaine de l'automobile.

On sait que les canalisations mises en oeuvre dans l'automobile, jusqu'à présent métalliques, tendent à être remplacées par des canalisations en matière plastique, notamment pour des questions de poids. L'étanchéité de ces canalisations, et notamment au niveau de leur liaison avec des embouts de raccordement, est une question aujourd'hui importante compte tenu de nouvelles directives qui visent à protéger l'environnement. En effet, un véhicule automobile se doit d'avoir rejets limités tant en ce qui concerne bien entendu l'échappement de son moteur mais également toutes les émissions d'une manière générale. L'objectif de ces directives est de réduire de plusieurs dizaines de fois le poids de substance émise par un véhicule automobile et de nature à polluer l'environnement tels que les plastifiants, les solvants, les hydrocarbures...

Dans le système de stockage et de délivrance du carburant à un moteur de véhicule automobile, ces normes concernent les émissions d'hydrocarbures additionnées éventuellement d'alcools. Un véhicule est ainsi placé dans une chambre à atmosphère contrôlée et on quantifie les émissions dont il est le sujet. On compare ces émissions à une quantité normative qui doit être respectée à l'état neuf du véhicule mais également dans certains états d'usage de celui-ci, qualifiés soit par sa durée de service soit par la distance parcourue. C'est ainsi qu'on s'est préoc. cupé de deux types d'émissions : d'une part les émissions d'hydrocarbures provenant de la migration des produits au travers des matières plastiques chargées de les contenir ou de les transporter et, d'autre part, des émissions d'hydrocarbures provenant de fuites entre deux pièces lors d'une jonction ou d'une liaison telle que celles rappelées ci-dessus. De telles liaisons ont généralement leur étanchéité qui se dégrade dans le temps à cause du fluage des divers constituants et des sollicitations, en débattement, en vibrations ou du fait de la chaleur qu'elles subissent.

Le document EP 0 577 492 décrit un procédé de renforcement de ces liaisons par lequel on comfirme un tuyau autour d'un insert par l'expansion d'une matière plastique moulée autour d'un tube.

D'une autre manière, pour améliorer la qualité de ces liaisons notamment en ce qui concerne leur tenue dans le temps, l'invention a pour objet un procédé de verrouillage de l'emmanchement d'un tube en matière plastique sur un embout selon lequel on choisit un embout présentant des reliefs extérieurs annulaires, on provoque une déformation au moins élastique d'une portion annulaire du tube qui chevauche l'embout pour le contraindre à pénétrer au moins dans un creux annulaire de cet embout par application sous pression d'une matière fluide et solidifiable autour de la portion de tube et on bloque le tube ainsi déformé sur l'embout en provoquant la solidification de la matière appliquée sous pression. Le mode préféré de réalisation de l'invention consiste à appliquer la matière par injection sous pression dans un moule entourant la portion annulaire du tube.

D'autres caractéristiques et avantages de l'invention apparaîtront de la description d'un mode de réalisation donné ci-après à titre non limitatif.

Il sera fait référence aux dessins annexés parmi lesquels :
- la figure 1 est une vue simplifiée en coupe d'un assemblage à verrouiller conformément au procédé de l'invention,
- la figure 2 est une même vue de l'assemblage obtenu par ce procédé.

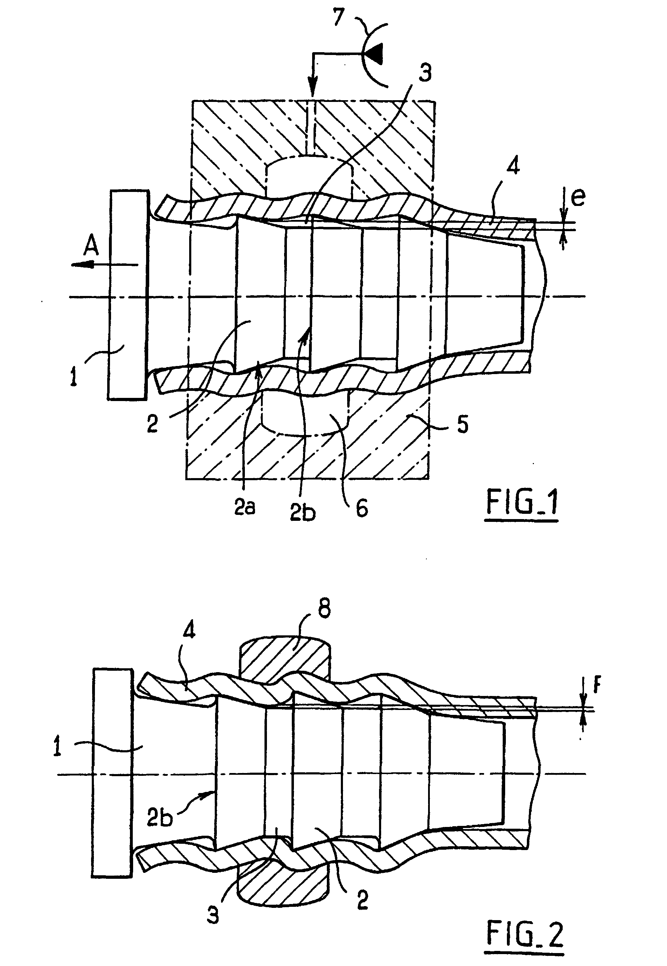

A la figure 1 on a représenté un embout 1 tubulaire possédant une série de reliefs 2 annulaires sur sa surface extérieure définissant entre eux des creux 3. Cette disposition est bien connue et dénommée embout à dents de sapin. Un tube 4 est emmanché à force sur cet embout. Lors de l'emmanchement dans le sens A du tube sur l'embout, les faces coniques 2a des reliefs 2 aident à la dilatation radiale du tube, cette dilatation se produisant au moins partiellement dans le domaine élastique de déformation de ce tube. Au droit des creux 3, le tube tend par lui-même à se resserrer sur l'embout si bien qu'il se crée un système d'ondulation du tube autour de l'embout qui s'oppose à son arrachement dans le sens inverse du sens A. Cette opposition est renforcée par le flanc 2b abrupt de chaque relief 2. Néanmoins la pénétration du tube à l'intérieur des creux 3 est relativement faible et il existe souvent un écart noté e entre le fond des creux 3 et la surface interne du tube mesurée au droit de ses parties les plus étroites. En outre, la nature même du matériau plastique qui constitue le tube 4 conduit, au fil du temps, à un relâchement de la force de serrage de l'embout 1 par le tube. La liaison se fait donc plus lâche et si cette liaison participe à une installation qui véhicule du fluide sous pression même faible, des fuites peuvent intervenir entre les surfaces en contact du tube et des reliefs 2 de l'embout 1.

Selon l'invention, on enferme une telle liaison dans un moule 5, par exemple en deux parties qui se referment à la manière d'un collier sur le tube emmanché sur l'embout, ce moule 5 présentant une cavité annulaire 6 susceptible d'être reliée à des moyens d'injection 7 d'une matière liquide sous pression.

On aura placé le moule 5 de manière que la cavité annulaire 6 soit située en regard d'au moins un creux 3 du relief de l'embout 1. La matière liquide envoyée sous pression dans la cavité annulaire 6 (injection sous pression) a pour premier effet de créer une force de compression radiale du tube 4 contre l'embout et donc de forcer la pénétration de la paroi de ce tube 4 à l'intérieur du creux 3 en regard de l'ouverture annulaire 6. En effet, dans ce type d'injection les pressions utilisées sont suffisamment grandes pour yaincre la résistance de la paroi du tube 4 à sa déformation radiale. Ainsi, l'espace e défini précédemment en regard de la figure 1 s'amenuise et devient un espace f représenté à la figure 2. Tout en maintenant la pression à l'intérieur de la cavité 6, on laisse la matière injectée se refroidir et se solidifier pour former la bague 8 représentée à la figure 2. Cette bague constitue un anneau inextensible qui s'oppose à la tendance de la paroi du tube 4 à revenir à sa forme initiale.

La figure 2 montre de manière explicite que l'on a d'une part augmenté les surfaces en contact entre les reliefs de l'embout 1 et du tube 4 et d'autre part amélioré considérablement l'ancrage du tube 4 derrière la face abrupte 2b d'un relief 2.

La matière injectée dans la cavité 6 pour former la bague 8 sera choisie en fonction de sa capacité à conserver des dimensions stables dans le temps. On pourra par exemple choisir une résine chargée de matériau minéral afin de constituer une véritable bague de blocage du tube sur l'embout. On aura noté par ailleurs que, de manière classique, la matière injectée dans la cavité 6 est à une température relativement élevée ce qui aide à la déformation du tube lors de la compression radiale au moment de l'injection et ce qui permet également de favoriser l'adhésion de la bague 8 sur la surface extérieure du tube 4. A ce propos d'ailleurs on aura pu si nécessaire enduire cette surface extérieure du tube 4 d'un produit favorisant l'adhésion de la matière injectée.

On comprend que le verrouillage de l'assemblage ainsi réalisé confère à cet assemblage une plus grande stabilité dans le temps, la matière de la bague 8 étant choisie pour son invariabilité dimensionnelle et son insensibilité à l'environnement. En outre, la présence de cette bague de verrouillage 8 peut présenter l'avantage de maintenir réunies les couches superposées pouvant former la paroi 4 d'un tube multicouche, couches qui pouvaient avoir tendance au voisinage notamment d'une extrémité du tube à se déliter. C'est notamment le cas des tubes à couches multiples dont l'une au moins d'entre elles est formée d'un matériau autre qu'une matière plastique, tel qu'une feuille métallique.

## Revendications

1. Procédé de verrouillage de l'emmanchement d'un tube (4) en matière plastique sur un embout (1), selon lequel on choisit un embout (1) présentant des reliefs extérieurs (2, 3) annulaires, on provoque et on maintient une déformation au moins élastique d'une portion annulaire du tube pour le contraindre à pénétrer dans au moins un creux annulaire (3) de l'embout (1), **caractérisé en ce que** pour provoquer la déformation susdite on applique sous pression une matière fluide et solidifiable autour de la portion de tube et **en ce que**, pour maintenir cette déformation, on solidifie la matière maintenue sous pression.

2. Procédé selon la revendication 1, **caractérisé en ce que** la matière est appliquée par injection sous pression dans un moule (5) entourant la portion annulaire du tube (4).

## Patentansprüche

1. Verfahren zum Verriegeln des Aufsteckendes eines Rohrs (4) aus Kunststoffmaterial auf einem Anschlußstück (1), bei dem man ein Anschlußstück (1) wählt, das ringförmige äußere Konturen (2, 3) hat, und eine zumindest elastische Verformung eines ringförmigen Abschnitts des Rohrs bewirkt und beibehält, um das Rohr zu zwingen, in zumindest einen ringförmigen Hohlraum (3) des Anschlußstücks (1) einzudringen, **dadurch gekennzeichnet, daß** ein fluides und aushärtefähiges Material unter Druck um den Abschnitt des Rohrs herum aufgebracht wird, um das Verformen zu bewirken, und das unter Druck gehaltene Material ausgehärtet wird, um die Verformung beizubehalten.

2. Verfahren nach Anspruch 1, **dadurch gekennzeichnet, daß** das Aufbringen des Materials durch Einspritzen unter Druck in eine Gußform (5) erfolgt, die den ringförmigen Abschnitt des Rohrs (4) umgibt.

## Claims

1. A method of locking the engagement of a tube (4) of plastics material on an endpiece (1), according to which an endpiece (1) is selected that has annular external portions in relief (2, 3), a deformation that is at least elastic of an annular portion of the tube is induced and maintained in order to constrain the tube to penetrate into at least one annular groove (3) of the endpiece (1), **characterized in that** in order to induce said deformation a solidifiable fluid material is applied under pressure around said portion of the tube, and **in that** in order to maintain this deformation the material is solidified as maintained under pressure.

2. A method according to claim 1, **characterized in that** the material is applied by being injected under pressure into a mold (5) surrounding the annular portion of the tube (4).
